# EUROPEAN PATENT SPECIFICATION

(11) **EP 2 877 712 B1**
(45) Date of publication and mention of the grant of the patent: **06.11.2019**
(21) Application number: 12839216.4
(22) Date of filing: 26.07.2012
(51) Int. Cl.: F16C 17/02, F16C 32/06, F16C 33/10, F01K 7/16, F01K 25/08, F01D 25/22

(54) **HERMETICALLY SEALED TURBO EXPANDER SYSTEM FOR USE IN ORGANIC RANKINE CYCLES AND ORGANIC RANKINE CYCLE PLANT**
HERMETISCH ABGEDICHTETES TURBOEXPANDIERSYSTEM ZUR VERWENDUNG IN ORGANISCHEN RANKINEZYKLEN UND ANLAGE FÜR ORGANISCHE RANKINEZYKLEN
SYSTÈME DE TURBODÉTENDEUR SCELLÉ HERMÉTIQUEMENT DESTINÉ À ÊTRE UTILISÉ DANS DES CYCLES DE RANKINE À CALOPORTEUR ORGANIQUE ET USINE À CYCLE DE RANKINE À CALOPORTEUR ORGANIQUE

(43) Date of publication of application: 03.06.2015
(73) Proprietor: Siemens Aktiengesellschaft, 80333 München (DE)
(72) Inventor: HAJE, Detlef, 02828 Goerlitz (DE); POLIKHOV, Stepan Alexandrovich, Moscow 140105 (RU)
(86) International application number: PCT/RU2012/000614
(87) International publication number: WO 2014/017943

(56) References cited:
- EP-A1- 0 050 959
- GB-A- 2 089 436
- GB-A- 2 405 458
- US-A- 3 393 515
- US-A- 4 044 561
- US-A- 4 178 754

## Description

The present invention is related to a hermetically sealed turbo expander system for use in organic rankine cycles, comprising a turbo expander, a rotatable rotor and a casing which is filled with an organic working medium in a gaseous condition, whereby the turbo expander is arranged around the rotor within the casing, at least two bearings for bearing the turbo expander around the rotor, with sealed openings in the casing for lines to and from the turbo expander. The invention is further related to an organic rankine cycle plant, comprising an evaporator, an turbo expander, a condenser, a pump and a recuperator, which are fluidically connected with each other in an organic rankine cycle, wherein an organic working medium can flow through a first line from the evaporator to the turbo expander, from the turbo expander through a second line to the condenser, from the condenser through a third line to the pump and from the pump through a fourth line to the evaporator, wherein the recuperator is arranged at the third line and the fourth line.

Organic rankine cycles (ORC) are an attractive technology for waste heat recovery and are gaining importance due to higher energy costs. Compared to the usual water/steam rankine cycle in today's steam power plants, organic rankine cycles use an organic working medium like R134a or R606. Organic working media have the advantage of lower boiling point as water.

Thus, lower temperature levels may be utilized for power generation with these organic working media. On the other hand, the organic working medium is more expensive and cannot be replaced as easily as water. For that reason, loss of working medium should be avoided, which can be achieved by hermetically sealed components in the cycle.

While it is comparatively easy to seal heat exchangers and pipe connections, rotating equipment like pumps or expanders need specific measures for effective sealing. A known solution is to enclose all rotating parts within one sealed casing, e. g. the expander, the generator and the bearings. That means, all components, namely the expander, the bearings, which are lubricated with a gas film of working medium, and the generator, which is cooled by the working medium in the casing, would operate in an atmosphere of the working medium. The advantage of this solution is that only pipe connections for working medium are required. There is no other medium entering or leaving the casing and there are no moving seals. But, it has shown that gas lubricated bearings have restrictions in their load capacity, limiting the allowable rotor mass of the organic rankine cycle plant and the power output of the components. Solutions for hermetically sealed expanders with high rotor masses are not available.

For example EP 0 050 959 A1 discloses a lubricating system for organic fluid power plant with a turbine connected via a gearbox with a generator, wherein the turbine and the generator are each pivoted via lubricated bearings. But EP 0 050 959 A1 fails to disclose the construction of these bearings and especially the possibility how to lead the lubrication to the inside of the bearings and out of them.

Also US 3 393 515 A discloses a power generating unit, wherein shafts with an axial bore are disclosed, which is connected with lateral bores in order to lubricate the bearings. Disadvantageously the lubrication have to lead though the shaft or also through the rotor of the generator, wherein the rotor mass is exposed to an irregular rotation. Furthermore the lubrication can flow unhindered from the bearings inside the housing without controlling of the fluid mass and therefore of the lubrication itself.

GB 2 089 436 A discloses a closed cycle power plant in which organic working fluid is vaporised and supplied to a prime mover in a sealed canister. Bearings are lubricated by a condensate of the working fluid. But also GB 2 089 436 A fails to disclose the construction of the bearings and the way to lubricate them.

Therefore, the invention is based on the object of increasing the rotor mass of a rotor and the power output of an organic rankine cycle plant.

Aforesaid object is solved by a hermetically sealed turbo expander system with the features according to independent claim 1 and an organic rankine cycle plant with the features according to claim 4. Further features and details of the present invention result from the further dependent claims, the description and the drawings. Features and details discussed with respect to the hermetically sealed turbo expander can also be applied to the organic rankine cycle plant and vice versa.

According to a first aspect of the invention aforesaid object is solved by a hermetically sealed turbo expander system for use in organic rankine cycles, comprising a turbo expander, a rotatable rotor and a casing which is filled with an organic working medium in a gaseous condition, whereby the turbo expander is arranged around the rotor within the casing, at least two bearings for bearing the turbo expander around the rotor, with sealed openings in the casing for lines to and from the turbo expander. The hermetically sealed turbo expander system is characterized in that the at least two bearings are liquid lubricated bearings. Further the hermetically sealed turbo expander system comprises at least one sealed supply opening in the casing for guiding one or more supply lines to the at least two bearings and a feedback opening in the casing for guiding a feedback line to the organic ranking cycle.

Such a hermetically sealed turbo expander system enables to use a rotor with a relative high mass and an increased power output of an organic rankine cycle plant. The hermetically sealed turbo expander system eliminates current limitations in rotor weight and less power output of an organic rankine cycle plant. The requirement of hermetically sealing the organic rankine cycle components is kept, by using an organic liquid working medium as lubricant. Using liquid lubricated bearings for bearing the turbo expander around the rotor of the hermetically sealed turbo expander system leads to a significant increase of the allowable rotor mass, eliminating current power output restrictions. The casing can be filled with an organic working medium at the outlet pressure of the expander. Therefore the organic working medium is in gaseous condition. The lubricating fluid for the liquid lubricate bearings needs to be in substantially liquid condition in order to provide a reliable bearing lubrication, in particular a hydrostatic and/or hydrodynamic lubrication. For this reason, the lubricating fluid can be guided through one or more supply lines from the outside of the casing from within the organic rankine cycle in liquid condition and therefore can be kept in substantially liquid condition within the liquid lubricated bearings. The one or more supply lines are guided through at least one sealed supply opening in the casing from the organic rankine cycle to the at least two bearings. The casing can have one sealed supply opening for one supply line, whereby the supply line is splitted within the casing into at least two parts for guiding the organic working medium through the splitted parts to the at least two liquid lubricated bearings. Alternative to that the casing can comprise two or more sealed supply openings for guiding two or more supply lines to the liquid lubricated bearings. It is possible that for each liquid lubricated bearing a separate supply line is guided through corresponding sealed supply openings in the casing.

According to a preferred development of the invention a hermetically sealed turbo expander system is preferred which is characterized in that each liquid lubricated bearing comprises seals limiting a bearing-to-shaft gap of a liquid lubricated bearing, whereby each liquid lubricated bearing comprises an organic working fluid input line to be connected with a supply line and an organic working fluid output line. That means the organic working fluid input line of a liquid lubricated bearing is connected to one supply line, so that organic working fluid can be guided from a supply line into the organic working fluid input line of the liquid lubricated bearing. Each liquid lubricated bearing forms together with the seals, in particular two seals, between the liquid lubricated bearing and the rotor a bearing-to-shaft gap. The organic working fluid input line ends into the bearing-to-shaft gap and the organic working fluid output line is also connected to the bearing-to-shaft gap, so that organic working medium supplied by the supply line can flow through the liquid working fluid input line of the bearing through the bearing-to-shaft gap and from the bearing-to-shaft gap through the organic working fluid output line into the casing of the hermetically sealed turbo expander system.

In order to ensure a liquid condition of the organic working medium in the liquid lubricated bearings, the organic working medium should be pressurized above the casing internal pressure, so that it would not boil at the internal temperature at the bearing location. That means it is necessary to ensure that the pressure in the supply lines is substantially kept up to the point when the organic working medium leaves the bearings. This is achieved by sealing the liquid lubricated bearing area from the casing internal area by the seals. Slight leakages are allowed as there will be leakage into the same working medium. No pollution can occur. Further no loss of organic working medium is possible. After passing the liquid lubricated bearing surfaces, the organic working medium can leave the bearings into the casing. To control the flow of the organic working medium from the liquid lubricated bearings into the casing a flow resistance is advantageous. Therefore a hermetically sealed turbo expander system is preferred, wherein each organic working medium output line comprises a flow resistance. This can be achieved by a throttle, a gap, an internal flow or a valve. Such a flow resistance can control the organic working medium flow and the pressure of the organic working medium in the liquid lubricated bearings. The organic working medium which flows through the liquid lubricated bearings into the casing can leave the casing through the feedback line, so that the organic working medium can be kept constant at the same pressure in the casing.

Further a hermetically sealed turbo expander system is preferred which is characterized in that a generator is arranged inside the casing which is coupled to the rotor for producing electrical energy, whereby one of the at least two liquid lubricated bearings is arranged at the rotor at that side of the generator which is turned away from the turbo expander. Such an arrangement of the at least two liquid lubricated bearings leads to a significant increase of the allowable rotor mass and therefore of the power output of the generator of the hermetically sealed turbo expander system.

According to a second aspect of the invention the object is achieved by an organic rankine cycle plant, comprising an evaporator, a turbo expander, a condenser, a pump and a recuperator, which are fluidically connected with each other in an organic rankine cycle, wherein an organic working medium can flow through a first line from the evaporator to the turbo expander, from the turbo expander through a second line to the condenser, from the condenser through a third line to the pump and from the pump through a fourth line to the evaporator, wherein the recuperator is arranged at the third line and the fourth line. The organic rankine cycle plant is characterized in that the turbo expander is a hermetically sealed turbo expander system according to the first aspect of the invention, in particular according to claims 1 to 5. The organic rankine cycle plant further comprises at least one supply line for guiding the organic working medium in a liquid condition from the pump to the at least two liquid lubricated bearings and a feedback line arranged between the feedback opening in the casing and one of the lines of the organic rankine cycle plant for discharging gaseous organic working medium from the inside of the casing back in the organic rankine cycle.

Such an organic rankine cycle plant enables an increased allowable rotor mass and an increased power output due to the liquid lubrication of the bearings of the hermetically sealed turbo expander system. Such an organic rankine cycle plant eliminates the current limitations in the rotor weight and thus the power output of organic rankine cycle plants. The requirement of hermetically sealing the cycle components is kept by such an organic rankine cycle plant by using liquid working medium as lubricant for the bearings.

The components of the organic rankine cycle plant are arranged and connected to each other in such a way that they build an organic rankine cycle. An advantage of such an organic rankine cycle plant is that the organic working medium can be used for lubricating the liquid lubricated bearings of the hermetically sealed turbo expander system. It is not necessary to use a separate lubricant fluid for lubricating the bearings arranged around the rotor of the hermetically sealed turbo expander system. The organic working medium which is supplied by the one or more supply lines to the liquid lubricated bearings can flow back into the organic rankine cycle through the casing and through the feedback line, so that the amount of the organic working medium can be kept constant in the organic rankine cycle. The organic working medium is transported through the supply lines by the pump. That means the organic working medium is pressurized by the pump. The pump ensures that the pressure is substantially kept up to the point when the organic working medium leaves the liquid lubricated bearings. After passing the liquid lubricated bearings the organic working medium can leave the liquid lubricated bearings into the casing. This can be controlled by a flow resistance in the organic working medium output lines of the bearings. That the organic working medium flows into the casing of the hermetically sealed turbo expander system, is beneficial from a generator cooling point of view. That means the resulting internal flow of the organic working medium in the casing has a cooling effect on the generator. The organic working medium can leave the casing through the feedback opening in the casing and then through the feedback line and can flow back to the organic rankine cycle. The feedback line can be arranged between the feedback opening in the casing and one of the lines of the organic rankine cycle plant. To which line the feedback line guides the organic working medium depends on the pressure of the organic working medium and the pressure in the lines of the organic rankine cycle.

Preferred is an organic rankine cycle plant, whereby the feedback line enters the second line, in particular in an area between the casing of the hermetically sealed turbo expander system and the condenser. This guarantees that the organic working medium coming from the feedback line can be liquefied by the condenser and pressurized again by the pump of the organic rankine cycle plant. If the pressure of the organic working medium in the feedback line is high enough it is possible to guide the organic working medium to another suitable point in the organic rankine cycle.

It is possible that pressure losses occurs in lines, valves and other components in the flow pass of the organic working medium to the liquid lubricated bearings. Therefore it is advantageous that the organic working medium is supplied to the liquid lubricated bearings from an organic rankine cycle point of elevated pressure. Advantageously the organic working medium is supplied to the liquid lubricated bearings by means of a pump or a compressor. Therefore an organic rankine cycle plant is preferred, which is characterized in that the at least one supply line is arranged between an area between the recuperator and the pump and the liquid lubricated bearings. Thus, the pump of the organic rankine cycle plant can be used to pressurize the organic working medium up to the suitable pressure for the liquid lubricated bearings. That means it is of advantage that the pump of the organic rankine cycle plant pressurizes the organic working medium not only for the evaporator, but also for the liquid lubricated bearings. Therefore, a split of the fourth line between the pump and the recuperator is of advantage, so that the main part of the organic working medium can flow through the recuperator to the evaporator, wherein a small part of the pressurized organic working medium can flow through the at least one supply line to the bearings in the casing of the hermetically sealed turbo expander system. The pump heats up the organic working medium. Therefore the condenser of the organic rankine cycle plant has to cool down the organic working medium before the organic working medium enters the pump.

The organic working fluid which is used for lubricating the bearings needs to be in substantially liquid condition in order to provide a reliable bearing lubrication. For this reason the lubricating organic working medium shall be supplied in liquid condition to the bearings and shall be kept in substantially liquid conditions within the bearings. In order to ensure the liquid condition, the organic working medium may either be sub-cooled, so that the organic working medium would not boil at the internal pressure in the casing, or pressurized above the casing internal pressure, so that the organic working medium would not boil at the internal temperature at the bearing location. Preferred is a combination of both measures.

In case of a sub-cooled organic working medium, the organic working medium temperature needs to be below the situation temperature belonging to the internal casing pressure. This can be achieved by cooling the organic working medium or by taking the organic working medium from a low-temperature point of the organic rankine cycle. It has to be considered that the temperature will rise due to heat transfer into lines, bearing structure and due to viscous friction within the bearings. The cooling is achieved by heat transfer to lower temperature organic working medium within the organic rankine cycle, for example condensate, or by some external medium of lower temperature, for example cooling water, refrigerant or air. The organic working medium is supplied to the liquid lubricated bearings from an organic rankine cycle point of elevated pressure or by the pump. The pump can be located before or after the organic working medium has passed the condenser.

Preferred is a combination of sub-cooling and pressurizing the organic working medium. The extent of the cooling and the pressurizing can be reduced by such a combination to those measures alone.

Substantially liquid condition of the organic working medium means that the organic working medium is in liquid or in liquid/gaseous condition, the latter provided that the lubrication of the bearings will significantly differ from a purely gaseous lubrication. It is expected that the steam content of below 50 %, especially below 30 %, will be sufficient. This may depend on the actual conditions in the casing and the selected organic working medium.

The at least one supply line is guided through the sealed openings in the casing to the liquid lubricated bearings. Preferred is an organic rankine cycle plant which is characterized in that an additional cooling device is arranged at the at least one supply line or at the third line for cooling the organic working medium in the supply line or in the third line. This ensures that the organic working medium temperature is below the situation temperature belonging to the internal casing pressure.

Further an organic rankine cycle plant is preferred, which is characterized in that an additional pump is provided at the at least one supply line to compress the organic working medium in the at least one supply line. This measure ensures that the pressure of the organic working medium in the supply line is substantially kept up to the point when the organic working medium leaves the liquid lubricated bearings.

The present invention is further described with respect to the accompanying figures. The figures show schematically:
- Fig. 1: an organic rankine cycle plant with an inventive hermetically sealed turbo expander system and
- Fig. 2: a liquid lubricated bearing arranged around a rotor of a hermetically sealed turbo expander system.

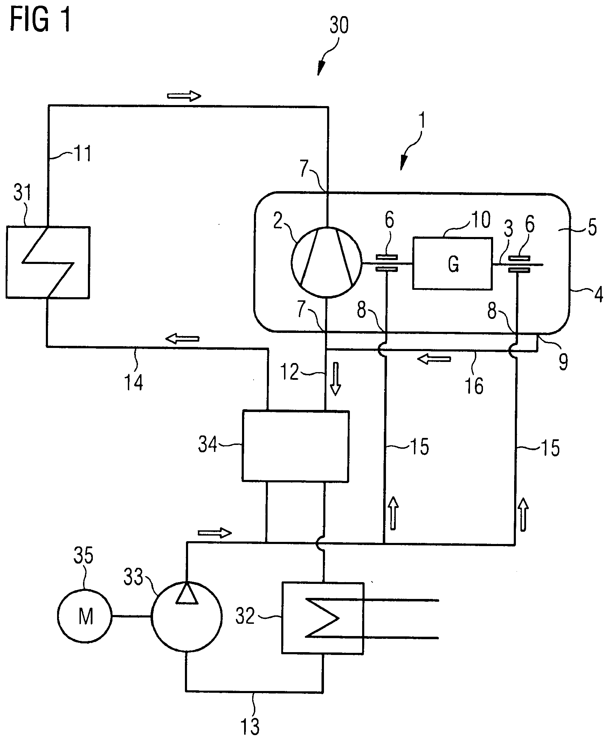

In Fig. 1 an organic rankine cycle plant 30 is disclosed which comprises a hermetically sealed turbo expander system 1 according to the invention. The organic rankine cycle plant 30 comprises an evaporator 31, a turbo expander 2, a condenser 32, a pump 33 and a recuperator 34, which are fluidically connected with each other in an organic rankine cycle. In the organic rankine cycle an organic working medium 5 can flow through the first line 11 from the evaporator 31 to the turbo expander 2, from the turbo expander 2 through a second line 12 to the condenser 32, from the condenser 32 through a third line 13 to the pump 33 and from the pump 33 through a fourth line 14 to the evaporator, wherein the recuperator 34 is arranged at the third line 13 and a fourth line 14 for exchanging heat from one line to the other line.

The hermetically sealed turbo expander system 1 is located in flow direction of the organic working medium 5 behind the evaporator 31.

The hermetically sealed turbo expander system 1 comprises a turbo expander 2, a rotatable rotor 3 and a casing 4 which is filled with an organic working medium 5 in a gaseous condition, whereby the turbo expander 2 is arranged around the rotor 3 within the casing 4. The hermetically sealed turbo expander system 1 further comprises two bearings 6 for bearing the turbo expander 2 around the rotor 3. The casing 4 has sealed openings 7 for lines 11, 12 to and from the turbo expander 2. The two bearings 6 are liquid lubricated bearings. In the casing 4 sealed supply openings 8 are arranged for guiding two supply lines 15 to the bearings 6 and a feedback opening 9 is arranged for guiding a feedback line 16 to the organic rankine cycle line 12.

The hermetically sealed turbo expander system 1 of the organic rankine cycle plant 30 enables the use of a rotor 3 with a high mass and therefore enables an increased power output. The hermetically sealed turbo expander system 1 eliminates current limitations in rotor weight and less power output of a known organic rankine cycle plant.

The casing 4 is filled with organic working medium 5 at the outlet pressure of the expander 2. The organic working medium 5 is in gaseous condition. The organic working medium 5 which is the lubricating fluid is guided through the supply lines 15 from outside of the casing 4 from the organic rankine cycle in liquid condition to the liquid lubricated bearings 6. The supply lines 15 are guided through sealed supply openings 8 in the casing 4 to the bearings 6. Each liquid lubricated bearing 6 has it own supply line 15.

The components of the organic rankine cycle plant 30 are arranged and connected to each other in such a way that they build an organic rankine cycle. An advantage of such an organic rankine cycle plant 30 is that the organic working medium 5 can be used for lubricating the liquid lubricated bearings 6 of the hermetically sealed turbo expander system 1. The organic working medium 5 which is supplied to the liquid lubricated bearings 6 can flow back into the organic rankine cycle through the casing 4 and the feedback line 16, respectively. The amount of organic working medium 5 can be kept constant in the organic rankine cycle plant 30.

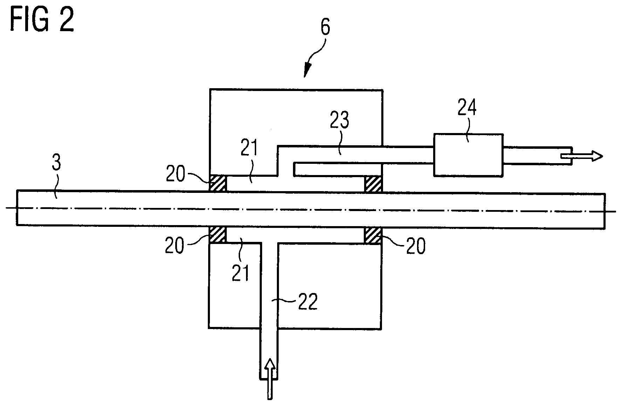

The organic working medium 5 is transported through the supply lines 15 by the pump 33. The pump 33 can be driven by a motor 35. The organic working medium 5 is pressurized by the pump 33. After passing the liquid lubricated bearings 6 the organic working medium 5 can leave the liquid lubricated bearings 6 into the casing 4. This can be controlled by a flow resistance 24, see fig. 2. Each liquid lubricated bearing 6 comprises an organic working fluid input line 22 and an organic working fluid output line 23. The flow resistance 24 is arranged in the organic working fluid output line 23.

Each liquid lubricated bearing 6 comprises seals 20 limiting a bearing-to-shaft gap 21 of a liquid lubricated bearing 6. The organic working fluid input line 22 of a liquid lubricated bearing 6 is connected to one supply line 15, so that organic working medium 5 can be transported through the supply line 15 into the organic working fluid input line 22 of the liquid lubricated bearing 6. Each liquid lubricated bearing 6 forms together with seals 20, in particular two seals 20, between the liquid lubricated bearing 6 and the rotor 3 the bearing-to-shaft gap 21. The organic working fluid input line 22 ends into the bearing-to-shaft gap 21 and the organic working fluid output line 23 is also connected to the bearing-to-shaft gap 21, so that organic working medium 5 can flow through the liquid working fluid input line 22 through the bearing-to-shaft gap 21 and from the bearing-to-shaft gap 21 through the organic working fluid output line 23 into the casing 4 of the hermetically sealed turbo expander system 1. The flow resistance 24 can be a throttle, a gap or a valve, in particular a ½-way valve. Such a flow resistance 24 can control the organic working medium flow and the pressure of the organic working medium 5 in the liquid lubricated bearings 6. The organic working medium 5 which flows through the liquid lubricated bearings 6 into the casing 4 can leave the casing 4 through the feedback line 16.

A generator 10 is arranged inside the casing 4 of the hermetically sealed turbo expander system 1. The generator 10 is coupled to the rotor 3 for producing electrical energy. One of liquid lubricated bearings 6 is arranged at that side of the generator 10 which is turned away from the turbo expander 2. Such an arrangement of the at least two liquid lubricated bearings 6 leads to a significant increase of the allowable rotor 3 mass and therefore of the power output of the generator 10 of the hermetically sealed turbo expander system 1.

### Reference signs

- 1: hermetically sealed turbo expander system
- 2: turbo expander
- 3: rotor
- 4: casing
- 5: organic working medium
- 6: liquid lubricated bearings
- 7: sealed openings
- 8: sealed supply opening
- 9: feedback opening
- 10: generator
- 11: first line
- 12: second line
- 13: third line
- 14: fourth line
- 15: supply line
- 16: feedback line

- 20: seals
- 21: bearing-to-shaft gap
- 22: organic working fluid input line
- 23: organic working medium output line
- 24: flow resistance

- 30: organic rankine cycle plant
- 31: evaporator
- 32: condenser
- 33: pump
- 34: recuperator

## Claims

1. Hermetically sealed turbo expander system (1) for use in organic rankine cycles, comprising a turbo expander (2), a rotatable rotor (3) and a casing (4) which is filled with an organic working medium (5) in a gaseous condition, whereby the turbo expander (2) is arranged around the rotor (3) within the casing (4), at least two bearings (6) for bearing the turbo expander (2) around the rotor (3), with sealed openings (7) in the casing for a first line (11) and a second line (12) to and from the turbo expander (2), whereby
the at least two bearings (6) are liquid lubricated bearings, with at least one sealed supply opening (8) in the casing (4) for guiding one or more supply lines (15) to the at least two bearings (6) and a feedback opening (9) in the casing (4) for guiding a feedback line (16) to the organic rankine cycle **characterized in that** each liquid lubricated bearing (6) comprises seals (20) limiting a bearing-to-rotor gap (21) of a liquid lubricated bearing (6), whereby each liquid lubricated bearing (6) comprises an organic working fluid input line (22) to be connected with a supply line (15) and an organic working fluid output line (23), whereby the organic working fluid input line (22) and the organic working fluid output line (23)are each connected to the bearing-to-rotor gap (21), an whereby the organic working medium output lines (23) each comprises a flow resistance (24).

2. Hermetically sealed turbo expander system (1) according to claim 1,
**characterized in that**
the flow resistance (24) is a throttle, a gap, a valve, in particular a ½-way valve.

3. Hermetically sealed turbo expander system (1) according to any of the preceding claims,
**characterized in that**
a generator (10) is arranged inside the casing (4) which is coupled to the rotor (3) for producing electrical energy, whereby one of the at least two liquid lubricated bearings (6) is arranged at the rotor (3) at the side of the generator (10) that is turned away from the turbo expander (2).

4. Organic rankine cycle plant (30), comprising a hermetically sealed turbo expander system (1) according to at least one of the preceding claims, an evaporator (31), a condenser (32), a pump (33) and a recuperator (34), which are fluidically connected with each other in an organic rankine cycle, wherein an organic working medium (5) can flow through the first line (11) from the evaporator (31) to the turbo expander (2), from the turbo expander (2) through the second line (12) to the condenser (32), from the condenser (32) through a third line (13) to the pump (33) and from the pump (33) through a fourth line (14) to the evaporator (31), wherein the recuperator (34) is arranged at the third line (13) and the fourth line (14), whereby the organic rankine cycle plant (30) further comprising at least one supply line (15) for guiding the organic working medium in a liquid condition from the pump (33) to the at least two liquid lubricated bearings (6) and a feedback line (16) arranged between the feedback opening (9) in the casing (4) and one of the lines (11, 12, 13, 14) for discharging gaseous organic working medium (5) from the inside of the casing (4) back in the organic rankine cycle.

5. Organic rankine cycle plant (30) according to claim 4,
**characterized in that**
the feedback line (16) enters the second line (12), in particular in an area between the casing (4) of the hermetically sealed turbo expander system (1) and the condenser (34).

6. Organic rankine cycle plant (30) according to claims 4 or 5,
**characterized in that**
the at least one supply line (15) is arranged between an area between the recuperator (34) and the pump (33) and the liquid lubricated bearings (6).

7. Organic rankine cycle plant (30) according to any of the preceding claims 4 to 6,
**characterized in that**
the at least one supply line (15) is guided through the sealed openings (8) in the casing (4) to the liquid lubricated bearings (6).

8. Organic rankine cycle plant (30) according to any of the preceding claims 4 to 7,
**characterized in that**
an additional cooling device is arranged at the at least one supply line (15) or at the third line (13) for cooling the organic working medium (5) in the supply line (15) or in the third line (13).

9. Organic rankine cycle plant (30) according to any of the preceding claims 4 to 8,
**characterized in that**
an additional pump is provided at the at least one supply line (15) to compress the organic working medium (5) in the at least one supply line (15).

## Patentansprüche

1. Hermetisch abgedichtetes Turboexpandiersystem (1) zur Verwendung in organischen Rankinezyklen, umfassend einen Turboexpander (2), einen drehbaren Rotor (3) und ein Gehäuse (4), das mit einem organischen Arbeitsmedium (5) in einem gasförmigen Zustand gefüllt ist, wobei der Turboexpander (2) um den Rotor (3) herum in dem Gehäuse (4) angeordnet ist, mindestens zwei Lager (6), um den Turboexpander (2) um den Rotor (3) herum zu tragen, mit abgedichteten Öffnungen (7) in dem Gehäuse für eine erste Leitung (11) und eine zweite Leitung (12) zu und vom Turboexpander (2), wobei die mindestens zwei Lager (6) flüssigkeitsgeschmierte Lager sind, mit mindestens einer abgedichteten Zuführungsöffnung (8) in dem Gehäuse (4), um eine oder mehrere Versorgungsleitungen (15) zu den mindestens zwei Lagern (6) zu führen, und einer Rückmeldungsöffnung (9) in dem Gehäuse (4), um eine Rückmeldungsleitung (16) zu dem organischen Rankinezyklus zu führen, **dadurch gekennzeichnet, dass** jedes flüssigkeitsgeschmierte Lager (6) Dichtungen (20) umfasst, die einen Lager-Rotor-Spalt (21) eines flüssigkeitsgeschmierten Lagers (6) begrenzen, wobei jedes flüssigkeitsgeschmierte Lager (6) eine organische Arbeitsflüssigkeitseingangsleitung (22), die mit einer Versorgungsleitung (15) zu verbinden ist, und eine organische Arbeitsflüssigkeitsausgangsleitung (23) umfasst, wobei die organische Arbeitsflüssigkeitseingangsleitung (22) und die organische Arbeitsflüssigkeitsausgangsleitung (23)jeweils mit dem Lager-Rotor-Spalt (21) verbunden sind, und wobei die organischen Arbeitsmediumausgangsleitungen (23) jeweils einen Durchflusswiderstand (24) umfassen.

2. Hermetisch abgedichtetes Turboexpandiersystem (1) nach Anspruch 1, **dadurch gekennzeichnet, dass** der Durchflusswiderstand (24) eine Drossel, ein Spalt, ein Ventil, im Besonderen ein Halbwegeventil, ist.

3. Hermetisch abgedichtetes Turboexpandiersystem (1) nach einem der vorhergehenden Ansprüche, **dadurch gekennzeichnet, dass** ein Generator (10) im Gehäuse (4) angeordnet ist, der mit dem Rotor (3) gekoppelt ist, um elektrische Energie zu erzeugen, wobei eines der mindestens zwei flüssigkeitsgeschmierten Lager (6) am Rotor (3) auf der Seite des Generators (10) angeordnet ist, die vom Turboexpander (2) abgewandt ist.

4. Organische Rankinezyklusanlage (30), umfassend ein hermetisch abgedichtetes Turboexpandiersystem (1) nach mindestens einem der vorhergehenden Ansprüche, einen Verdampfer (31), einen Verflüssiger (32), eine Pumpe (33) und einen Rekuperator (34), die in einem Rankinezyklus fluidmäßig miteinander verbunden sind, wobei ein organisches Arbeitsmedium (5) durch die erste Leitung (11) vom Verdampfer (31) zum Turboexpander (2), vom Turboexpander (2) durch die zweite Leitung (12) zum Verflüssiger (32), vom Verflüssiger (32) durch eine dritte Leitung (13) zur Pumpe (33) und von der Pumpe (33) durch eine vierte Leitung (14) zum Verdampfer (31) strömen kann, wobei der Rekuperator (34) an der dritten Leitung (13) und der vierten Leitung (14) angeordnet ist, wobei die organische Rankinezyklusanlage (30) ferner mindestens eine Versorgungsleitung (15) umfasst, um das organische Arbeitsmedium in einem flüssigen Zustand von der Pumpe (33) zu den mindestens zwei flüssigkeitsgeschmierten Lagern (6) zu führen, und eine Rückmeldungsleitung (16) zwischen der Rückmeldungsöffnung (9) in dem Gehäuse (4) und einer der Leitungen (11, 12, 13, 14) angeordnet ist, um gasförmiges organisches Arbeitsmedium (5) aus dem Inneren des Gehäuses (4) zurück in den organischen Rankinezyklus abzugeben.

5. Organische Rankinezyklusanlage (30) nach Anspruch 4, **dadurch gekennzeichnet, dass** die Rückmeldungsleitung (16) in die zweite Leitung (12) eintritt, insbesondere in einem Bereich zwischen dem Gehäuse (4) des hermetisch abgedichteten Turboexpandiersystems (1) und dem Verflüssiger (34).

6. Organische Rankinezyklusanlage (30) nach Anspruch 4 oder 5, **dadurch gekennzeichnet, dass** die mindestens eine Versorgungsleitung (15) zwischen einem Bereich des Rekuperators (34) und der Pumpe (33) sowie den flüssigkeitsgeschmierten Lagern (6) angeordnet ist.

7. Organische Rankinezyklusanlage (30) nach einem der vorhergehenden Ansprüche 4 bis 6, **dadurch gekennzeichnet, dass** die mindestens eine Versorgungsleitung (15) durch die abgedichteten Öffnungen (8) in dem Gehäuse (4) zu den flüssigkeitsgeschmierten Lagern (6) geführt wird.

8. Organische Rankinezyklusanlage (30) nach einem der vorhergehenden Ansprüche 4 bis 7, **dadurch gekennzeichnet, dass** eine zusätzliche Kühlvorrichtung an der mindestens einen Versorgungsleitung (15) oder an der dritten Leitung (13) angeordnet ist, um das organische Arbeitsmedium (5) in der Versorgungsleitung (15) oder in der dritten Leitung (13) zu kühlen.

9. Organische Rankinezyklusanlage (30) nach einem der vorhergehenden Ansprüche 4 bis 8, **dadurch gekennzeichnet, dass** eine zusätzliche Pumpe an der mindestens einen Versorgungsleitung (15) bereitgestellt ist, um das organische Arbeitsmedium (5) in der mindestens einen Versorgungsleitung (15) zu verdichten.

## Revendications

1. Système de turbodétendeur (1) scellé hermétiquement destiné à être utilisé dans des cycles de Rankine organiques, comprenant un turbodétendeur (2), un rotor rotatif (3) et un boîtier (4) rempli d'un milieu de travail organique (5) à l'état gazeux, le turbodétendeur (2) étant disposé à l'intérieur du carter (4) autour du rotor (3), au moins deux paliers (6) permettant de soutenir le turbodétendeur (2) autour du rotor (3), avec des ouvertures scellées (7) dans le carter prévues pour une première conduite (11) et une deuxième conduite (12) vers le turbodétendeur (2) et en provenance de celui-ci,
les au moins deux paliers (6) étant des paliers à lubrification liquide, avec au moins une ouverture d'alimentation scellée (8) dans le carter (4) permettant de guider une ou plusieurs conduites d'alimentation (15) vers les au moins deux paliers (6) et une ouverture de retour (9) dans le carter (4) permettant de guider une conduite de retour (16) vers le cycle de Rankine organique,
**caractérisé en ce que** chaque palier à lubrification liquide (6) comprend des joints d'étanchéité (20) limitant un intervalle (21) entre le palier et le rotor d'un palier à lubrification liquide (6), chaque palier à lubrification liquide (6) comprenant une conduite d'entrée de fluide de travail organique (22) devant être raccordée à une conduite d'alimentation (15) et à une conduite de sortie de fluide de travail organique (23), la conduite d'entrée de fluide de travail organique (22) et la conduite de sortie de fluide de travail organique (23) étant chacune raccordées à l'intervalle (21) entre le palier et le rotor, les conduites de sortie de milieu de travail organique (23) comprenant chacune une résistance à l'écoulement (24).

2. Système de turbodétendeur scellé hermétiquement (1) selon la revendication 1,
**caractérisé en ce que** la résistance à l'écoulement (24) est un étranglement, un intervalle, une soupape, en particulier une soupape centrale.

3. Système de turbodétendeur scellé hermétiquement (1) selon l'une quelconque des revendications précédentes,
**caractérisé en ce qu'**un générateur (10) est disposé à l'intérieur du carter (4) couplé au rotor (3) pour produire de l'énergie électrique, l'un des au moins deux paliers à lubrification liquide (6) étant disposé au niveau du rotor (3) à côté du générateur (10) qui est détourné du turbodétendeur (2).

4. Usine à cycle de Rankine organique (30), comprenant un système de turbodétendeur (1) scellé hermétiquement selon au moins l'une des revendications précédentes, un évaporateur (31), un condenseur (32), une pompe (33) et un récupérateur (34), qui sont raccordés fluidiquement les uns aux autres dans un cycle de Rankine organique, un milieu de travail organique (5) pouvant s'écouler de l'évaporateur (31) au turbodétendeur (2) via la première conduite (11), du turbodétendeur (2) au condenseur (32) via la deuxième conduite (12), du condenseur (32) à la pompe (33) via une troisième conduite (13), et de la pompe (33) à l'évaporateur (31) via une quatrième conduite (14), le récupérateur (34) étant disposé au niveau de la troisième conduite (13) et de la quatrième conduite (14),
l'usine à cycle de Rankine organique (30) comprenant en outre au moins une conduite d'alimentation (15) permettant de guider le milieu de travail organique à l'état liquide de la pompe (33) aux au moins deux paliers à lubrification liquide (6) et une conduite de retour (16) disposée entre l'ouverture de retour (9) dans le carter (4) et l'une des conduites (11, 12, 13, 14) pour réacheminer le milieu de travail organique gazeux (5) de l'intérieur du carter (4) dans le cycle de Rankine organique.

5. Usine à cycle de Rankine organique (30) selon la revendication 4,
**caractérisée en ce que** la conduite de retour (16) pénètre dans la deuxième conduite (12), en particulier dans une zone située entre le carter (4) du système de turbodétendeur scellé hermétiquement (1) et le condenseur (34).

6. Usine à cycle de Rankine organique (30) selon la revendication 4 ou 5,
**caractérisée en ce que** l'au moins une conduite d'alimentation (15) est disposée entre une zone située entre le récupérateur (34) et la pompe (33) et les paliers à lubrification liquide (6).

7. Usine à cycle de Rankine organique (30) selon l'une quelconque des revendications 4 à 6 précédentes,
**caractérisée en ce que** l'au moins une conduite d'alimentation (15) est guidée à travers les ouvertures scellées (8) dans le carter (4) jusqu'aux paliers à lubrification liquide (6).

8. Usine à cycle de Rankine organique (30) selon l'une quelconque des revendications 4 à 7 précédentes,
**caractérisée en ce qu'**un dispositif de refroidissement supplémentaire est disposé au niveau de l'au moins une conduite d'alimentation (15) ou au niveau de la troisième conduite (13) pour refroidir le milieu de travail organique (5) dans la conduite d'alimentation (15) ou dans la troisième conduite (13).

9. Usine à cycle de Rankine organique (30) selon l'une quelconque des revendications 4 à 8 précédentes,
**caractérisée en ce qu'**une pompe supplémentaire est prévue au niveau de l'au moins une conduite d'alimentation (15) pour comprimer le milieu de travail organique (5) dans l'au moins une conduite d'alimentation (15).
